# EUROPÄISCHE PATENTSCHRIFT

(11) **EP 1 354 418 B1**
(45) Veröffentlichungstag und Bekanntmachung des Hinweises auf die Patenterteilung: **22.04.2009**
(21) Anmeldenummer: 02708169.4
(22) Anmeldetag: 26.01.2002
(51) Int. Cl.: H04B 1/38

(54) **FREISPRECHEINRICHTUNG FÜR DEN BETRIEB VON MOBILTELEFONEN IN KRAFTFAHRZEUGEN**
HANDS-FREE DEVICE FOR OPERATING MOBILE TELEPHONES IN MOTOR VEHICLES
DISPOSITIF MAINS LIBRES DESTINE AU FONCTIONNEMENT DE TELEPHONES MOBILES DANS DES VEHICULES AUTOMOBILES

(30) Priorität: 28.01.2001 DE 10103610
(43) Veröffentlichungstag der Anmeldung: 22.10.2003
(73) Patentinhaber: Audioton Kabelwerk GmbH Zweigniederlassung Scheinfeld, 90592 Schwarzenbruck (DE)
(72) Erfinder: VOGEL, Frank, 90592 Schwarzenbruck (DE)
(74) Vertreter: Lelgemann, Karl-Heinz
(86) Internationale Anmeldenummer: PCT/DE2002/000269
(87) Internationale Veröffentlichungsnummer: WO 2002/060168

(56) Entgegenhaltungen:
- EP-A- 0 723 378
- EP-A- 1 119 160
- US-A- 5 333 177

## Beschreibung

Die Erfindung betrifft eine Freisprecheinrichtung für den Betrieb von Mobiltelefonen in Kraftfahrzeugen.

Eine derartige Freisprecheinrichtung ist aus der ADAC-Zeitschrift GUTE FAHRT Heft 6/1998 als universell, nämlich als für die meisten handelsüblichen Mobiltelefone (die auch sogenannten Handys) verwendbares Einbausystem mit optionalem Anschluß an das Autoradio zur Stummschaltung und Verwendung dessen Lautsprechers bekannt. Die vielseitige Verwendbarkeit dieses Systems beruht bei dieser bekannten Freisprecheinrichtung auf einer funktionalen Zweiteilung dahingehend, daß für die fahrzeugseitigen Anpassungen einschließlich der Steuerung der Freisprechkomponenten ein fahrzeugfest zu installierender Schnittstellenmodul mit Microprozessor vorgesehen ist, während alle gerätespezifischen Anforderungen (Ablaufprogramm und Daten) in einen Speicher im gerätespezifischen Stecker eines hier sogenannten Systemkabels ausgelagert sind, welches das Schnittstellenmodul mit einer gerätespezifisch schalenförmigen, in der Praxis Cradle genannten Halterung für das Mobiltelefon verbindet. Die Kommunikation zwischen diesen beiden Systemteilen besorgt der im Schnittstellenmodul enthaltener Mikroprozessor über zwei serielle Schnittstellen.

Der Nutzer braucht bei dieser bekannten Freisprecheinrichtung also lediglich zu seinem aktuell benutzten Mobiltelefon über eine dazu mechanisch passende Halterung samt elektrisch passendem Systemkabel zu verfügen, um diese im Fahrzeug installierte Freisprecheinrichtung nutzen zu können. Deshalb kann das zu benutzende Fahrzeug freizügig gewechselt bzw. ein Fahrzeug von verschiedenen Nutzern mit ihren unterschiedlichen Mobiltelefonen gefahren werden, ohne gegen die aktuellen Verbote des händischen Telefonierens im betriebsbereiten Kraftfahrzeug verstoßen zu müssen: Die gerätespezifische Halterung (Cradle) für die schocksichere Aufnahme des zugeordneten Mobiltelefones ist manuell leicht austauschbar auf einer fahrzeugfest montierten Montageeinheit verrastbar. Mit dem Anstecken des Systemkabels bzw. mit dem Starten des Motors bei angestecktem Kabel wird die Programmierung des Schnittstellenmodules initiiert, also der gerätespezifische Betriebsdatensatz aus dem Systemkabel-Stecker in den Mikroprozessor geladen und dessen Programm dadurch gerätespezifisch abgearbeitet.

Diese den Duplex-Freisprechbetrieb ermöglichende Einrichtung hat sich in der Praxis bewährt.

Die EP 0 723 378 A offenbart ein Telefon-System, dass sich flexibel auf verschiedene Typen von Mobiltelefonen einstellen kann. Das Mobiltelefon ist durch ein codiertes Kabel mit einem Schnittstellenmodul verbunden, welches spezielle Hardware-Module und Firmware-Treiber aufweist, sowie einen Mikrocontroller und eine Kabelauswahllogik. Die Kabelauswahllogik identifiziert das angeschlossene Kabel und damit den Typ des Mobiltelefons; ferner aktiviert sie die zugeordneten speziellen Hardware-Module und Firmware-Treiber, so dass der Mikrocontroller seine Betriebsparameter passend zu dem durch die codierung identifizierten Mobiltelefon einstellen kann. Das Schnittstellenmodul mit dem Mikrocontroller kann entweder separat zu einer Halterung des Mobiltelefons vorgesehen oder in der Halterung integriert sein. In jedem Fall ist aber nur ein einziger Mikrocontroller vorgesehen.

. Vorliegender Erfindung liegt nun die Aufgabe zugrunde, die gattungsgemäße Freisprecheinrichtung noch in Hinblick auf künftige Anforderungen vor allem hinsichtlich zuverlässiger und sicherer Übertragung auch größerer Datenvielfalt zu verbessern, wobei die Weiterverwendbarkeit und damit die Lebensdauer von Freisprecheinrichtungen maximiert werden soll. Erfindungsgemäß wird diese Aufgabe durch den Gegenstand des Anspruchs 1 gelöst. Es handelt sich dabei um eine Freisprecheinrichtung für den Betrieb von Mobiltelefonen in Kraftfahrzeugen, die jeweils mit einem Schnittstellenmodul, das fahrzeugspezifische Daten enthält, und einer Montageeinheit für eine leicht auswechselbare gerätespezifische Halterung mit gerätespezifischen Daten ausgestattet sind. Hierbei ist vorgesehen, daß einerseits das Schnittstellenmodul und andererseits die Montageeinheit und/oder die Halterung jeweils einen Mikroprozessor aufweisen. Über die über einen Bus miteinander kommunizierenden Mikroprozessoren wird es möglich gemäß dem Lösungsweg a) des Anspruchs 1, eine automatisch optimierende Schnittstellenkonfiguration und/oder gemäß dem Lösungsweg b) des Anspruchs 1 eine Berechtigungsprüfung und/oder gemäß dem Lösungsweg c) des Anspruchs 1 eine Datenverschlüsselung und/oder Datenkompression zu realisieren. Die Freisprecheinrichtung wird damit auch für Mobiltelefone der künftigen UMTS-Generation problemlos verwendbar. Eine zuverlässige und sichere Übertragung ist auch bei großer Datenvielfalt gewährleistet.

Zur automatischen Schnittstellenkonfiguration ist gemäß Merkmalkombination a) vorgesehen, daß die Mikroprozessoren über eine serielle, wahlweise synchron und asynchron betreibbare Schnittstelle über einen Bus miteinander kommunzieren, um zu Betriebsbeginn die Schnittstelle gemäß der aktuellen Gerätekombination zu konfigurieren. Die Schnittstellenkonfiguration kann z.B. ausgelöst werden, wenn das Schnittstellenmodul ein Umschaltkommando an die Montageeinheit zurücksendet, weil es dessen gerade empfangenen Satz von Schnittstellenparametern unterstützen kann.

Zur Berechtigungsprüfung ist gemäß Merkmalkombination b) vorgesehen, daß die Mikroprozessoren über eine serielle, wahlweise synchron und asynchron betreibbare Schnittstelle über einen Bus miteinander kommunizieren; um eine Berechtigungsprüfung hinsichtlich der Zulässigkeit des Betriebs eines Mobiltelefons an den vorliegenden Schnittstellenmodul durchzuführen.

Die Datenverschlüsselung gemäß Merkmalkombination c) erfolgt dadurch, daß die vorzugsweise über einen Bus miteinander kommunizierenden Mikroprozessoren eine Datenverschlüsselung durchführen. Hierbei kann das erste Zeichen eines Datentelegramms ein empfängerseitig bekanntes Synchronisationszeichen sein, das senderseitig gemäß einer vorgegebenen Gesetzmäßigkeit chiffriert wird, woraufhin die anderen Zeichen des sendenden Datentelegramms nach der gleichen Gesetzmäßigkeit chiffriert werden, während empfangsseitig das erste Zeichen in das erwartete Synchronisationszeichen rückgewandelt wird, woraufhin auch die anderen Zeichen dieses Telegramms in gleicher Weise behandelt werden.

Die Datenkompression kann durch eines der eingeführten Standardverfahren erfolgen.

Bei dieser Freisprecheinrichtung, bei der, wie erläutert, die Schnittstellenkonfiguration automatisch optimierbar ist, und/oder eine Berechtigungsprüfung und/oder eine Datenverschlüsselung und Datenkompression durchführbar ist, wirkt die mit einem Prozessor ausgestattete gerätespezifische Halterung vorzugsweise nur als Steuereinheit für die gerätespezifischen Funktionen des gerade zu betreibenden Mobiltelefons, wie insbesondere Schnittstellenübergabeund Akkuladezyklus. Die in den Prozessor der Halterung abgelegten gerätespezifischen Daten beziehen sich vorzugsweise in erster Linie auf die Leistungsklasse der Mobiltelefone, weniger oder überhaupt nicht auf herstellerspezifische Daten, so daß eine Halterung im wesentlichen nur bei Übergang auf eine andere Leistungsklasse ausgetauscht werden muß und also nicht unbedingt bei jedem Austausch des Mobiltelefons ein Austausch der Halterung erforderlich wird. Auf eine Identifikation des gerade betriebenen Mobiltelefons kann verzichtet werden, da die Steuereinheiten zwischen Halterung und Schnittstellenmodul geräteunabhängig zusammenwirken und zwar vorzugsweise seriell. In dem Schnittstellenmodul mit seinem Prozessor sind alle fahrzeugspezifischen Funktionen abgebildet und im Zusammenhang damit auch die optimalen Funktionen der Universal-Freisprecheinrichtung aktivierbar. Ein Schnittstellenmodul kann für wenigstens eine Typenklasse unterschiedlicher Fahrzeuge ausgelegt sein. Für den Datenverkehr erfolgt eine automatische Abstimmung zwischen der Halterung und dem Schnittstellenmodul, die über den Bus verbunden sind. Die Schnittstellenkonfiguration findet über Datenaustausch statt und zwar vorzugsweise auf optimale Geschwindigkeit und Datensicherheit zwischen den Datenbusteilnehmern.

Insbesondere ist diese automatische Schnittstellenkonfiguration mit der Berechtigungsprüfung und mit der Datenverschlüsselung verknüpfbar.

Bei besonders bevorzugten Ausführungen kann das Schnittstellenmodul mit einer Spracherkennung zu immanueller Sprachsteuerung ausgestattet sein.

Falls im Kraftfahrzeug schon ein Steuergerät installiert sein sollte, etwa für das Autoradio, für einen Fernseher, für ein Navigationsgerät oder für ein Kommunikationssystem wie Telematic oder als Internetzugang, kann die z.B. mittels einer Kabelverbindung oder vorzugsweise einer direkten Steckverbindung an die Telefonhalterung angeschlossene Montageeinheit statt an ein eigenes Schnittstellenmodul der Freisprecheinrichtung auch unmittelbar an jenes Steuergerät angeschlossen werden.

Grundsätzlich kann die Kabelverbindung für den Bus zwischen Schnittstellenmodul und Montageeinheit für die Telefonhalterung durch eine Fernsteuerung ersetzt oder ergänzt werden, die vorzugsweise noch für andere Funktionen als für den Betrieb der Freisprecheinrichtung einsetzbar ist, nämlich insbesondere für solche Funktionen, die bei modernen Fahrzeugen von einem Multifunktionslenkrad aus aktivierbar sind.

Schließlich ist eine durch eine materielle oder kabellos immaterielle Busverbindung zwischen Schnittstellenmodul und Montageeinheit für die Halterung nun eröffnete Anschlußmöglichkeit mehrerer auch für gänzlich unterschiedliche Leistungsklassen ausgelegter Halterungen an ein gemeinsames, vorzugsweise einziges, Schnittstellenmodul im Fahrzeug vor allem für Geschäftsfahrzeuge von gesteigertem praktischem Interesse.

Um für Telefonate im Privatmodus nicht das Mobiltelefon aus seiner Halterung herausnehmen zu müssen, kann deren fahrzeugfeste Montageeinheit mit einem Sender-Empfänger für drahtlose Kommunikation etwa über Kopfhörer und Mikrofon eines Headset ausgestattet oder nachgerüstet werden.

Der Einsatz ist in allen Kraftfahrzeugen, d.h. Personen- und Nutzfahrzeugen aller Art vorgesehen. Auch der Einsatz in Schienenfahrzeugen ist vorgesehen. Es handelt sich in der Regel um Einsatz in Landfahrzeugen, aber auch der Einsatz in z.B. Sportbooten und Sportflugzeugen ist entsprechend möglich.

Bezüglich Einzelheiten der erfindungsgemäßen Lösungen und deren Weiterbildungen wird außer auf die Ansprüche, die alle inhaltlich auch in wechselseitiger Ahängigkeit voneinander stehen können, auch auf nachstehende Beschreibung verwiesen, die anhand eines in der Zeichnung auf das Wesentliche vereinfacht skizzierten bevorzugten Realisierungsbeispieles zur Erfindung auf deren Grundfunktionen und Weiterbildungsmöglichkeiten näher eingeht.

### Dabei zeigt:

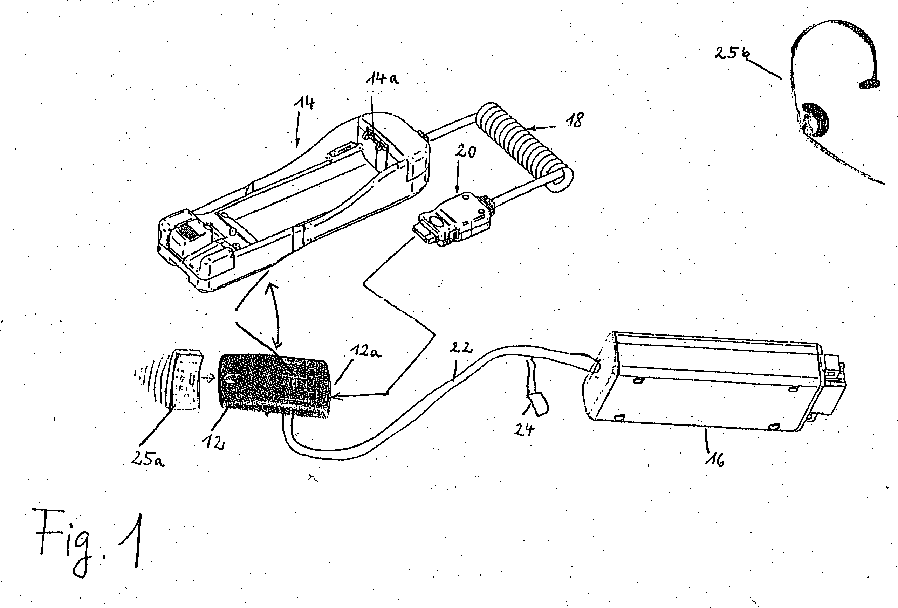

- Fig. 1: eine Explosionsdarstellung eines Ausführungsbeispiels einer Freisprecheinrichtung

Bei dem dargestellten Ausführungsbeispiel handelt es sich um eine hinsichtlich unterschiedlichster Typen und Leistungsklassen von marktgängigen Mobiltelefonen universell verwendbare Kraftfahrzeug-Freisprecheinrichtung, kurz Universal-Freisprecheinrichtung genannt.

Ein fahrzeugfest zu installierendes, universelles Schnittstellenmodul 16 ist unabhängig von den verschiedenen Mobiltelefonen (nicht gezeichnet) ausgelegt.

Das kommuniziert im Datenverkehr oder mit Pegelsteuerung aber geräteunabhängig über einen materiellen oder immateriellen Bus 22 und über eine ebenfalls fest im Fahrzeug montierte Montageeinheit 12 für eine gerätespezifisch ausgebildete, leicht austauschbar darauf zu befestigende Halterung 14. Diese Kommunikation erfolgt zwischen je einem Mikroprozessor beiderseits der Busverbindung, nämlich einem Mikroprozessor einerseits in Schnittstellenmodul 16 und einem Mikroprozessor andererseits in der Halterung 14 oder in der Montageeinheit 12, über nur noch eine einzige serielle Schnittstelle, die physikalisch synchron und asynchron betrieben werden kann. Eine Halterung 14 kann über ihre Montageeinheit 12 wahlfrei mit unterschiedlichen Schnittstellenmodulen 16 und ein Schnittstellenmodul 16 kann mit beliebigen Halterungen 14 zusammenarbeiten, wofür vor Einsetzen des Datenaustausches wechselseitig eine geräteunabhängige Schnittstellenanpassung erfolgt. Das bedeutet, daß keine feste gerätetechnische Zuordnung zwischen Halterung 14 und Montageeinheiten 12 bzw. Schnittstellenmodulen 16 eingehalten werden muß, sondern der Nutzer zu seinem Mobiltelefon die Halterung 14 freizügig an die z.B. in einem Mietwagen vorzufindende Montageeinheit 12 anschließen kann.

Die mit einem Prozessor ausgestattete, gerätespezifische Halterung 14 - in der Praxis Cradle genanht - wirkt ihrerseits nur als Steuereinheit für die gerätespezifischen Funktionen des gerade zu betreibenden Mobiltelefones, wie insbesondere Schnittstellenübergabe und Akku-Ladezyklus. Dafür ist an der im wesentlichen muldenförmige Halterung 14 ein Stecker 14a so positioniert, daß der mit den entsprechenden Anschlußstellen des spezifischen, in die Halterung 14 gerade eingesetzten Mobiltelefones zusammenwirkt. Die elektrische, insbesondere datentechnische Verbindung zwischen Halterung 14 und Montageeinheit 12 erfolgt über eine Anschlußeinheit, bei der es sich um ein Systemkabel 18 handeln kann, dessen Stecker 20 an die zugeordnete Buchse 12a in der Montageeinheit 12 gesteckt wird; oder aber statt dieser Kabel-Steckverbindung ist eine korrespondierende Steckverbindung 12b unmittelbar zwischen Montageeinheit 12 und Alterung 14 vorgesehen, die beim Aufsetzen der Halterung 14 auf die Montageeinheit 12 wirksam wird. Die in den Prozessor der Halterung 14 abgelegten gerätespezifischen Daten beziehen sich in erster Linie auf die Leistungsklasse der Mobiltelefone, weniger auf herstellerspezifische Daten, so daß eine Halterung 14 im wesentlichen nur bei Übergang auf eine andere Leistungsklasse ausgetauscht werden muß, noch nicht unbedingt beim bloßen Austausch von Mobiltelefonen (wenn nur deren Anschlüsse weiterhin zum eingebauten Stecker 14a passen).

Für einen Wechsel des Mobiltelefones ist es erforderlich, die Halterung 14 mit ihrer gerätespezifischen Software auszutauschen. Auf eine Identifikation des gerade betriebenen Mobiltelefones kann verzichtet werden, da die Steuereinheiten zwischen Halterung 14 und Schnittstellenmodul 16 seriell, also universal und deshalb geräteunabhängig zusammenwirken. Der Datenaustausch findet hier über den Bus 22 mit einem synchronen Dätenkanal statt, bei dem für alle beteiligen Systeme (also insbesondere Halterung14 und Modul 16) identisch alle Zeichen in einem festen Zeitraster bzw. in einem genau aufeinander abgestimmten Takt liegen. Das Taktsignal kann auf einer gesonderten Leitung geführt oder dem Datenstrom aufmoduliert sein. Die Datenblöcke beginnen und enden mit einem Synchronisationszeichen. So können auch die stark ansteigenden Datenmengen beherrscht werden, die mit Einführung des UMTS-Netzes zu erwarten sind, aber mit herkömmlichen asynchronen Schnittstellen, also mit der derzeit anzutreffenden asynchronen Datenübertragung nicht mehr beherrschbar wären. Zusätzliche Datenmengen für die Verarbeitung von Satelliten-Navigationsinformationen, Internet-Zugänge, SMS-Verkehr und dergleichen stellen dann auch kein Problem mehr dar. Im Interesse der gerätetechnischen Flexibilität ist aber eine Umschaltmöglichkeit zwischen synchronem und asynchronem Datenaustausch vorgesehen.

Im Schnittstellenmodul 16 mit seinem Prozessor sind alle fahrzeugspezifischen Funktionen abgebildet und in Zusammenhang damit auch die optionalen Funktionen dieser Universal-Freisprecheinrichtung aktivierbar, wie insbesondere eine aus der Nachrichtentechnik geläufige Echoentzerrung, Rauschunterdrückung, Sprächerkennung und -steuerung oder Text - Sprach-Wandlung. Zugleich ist dieser Prozessor als Transceiver zum Datenbus des Fahrzeuges ausgelegt. Schließlich dient er der Freisprecheinrichtung als Audioverstärker. Ein Schnittstellenmodul 16 kann für wenigstens eine Typenklasse unterschiedlicher Fahrzeuge ausgelegt sein, um zu größeren Fertigungslosen zu gelangen.

Wenn das Mobiltelefon in seiner Halterung 14 eingerastet und dadurch mit dem Stecker 14a verbunden ist, dann wird vom Schnittstellenmodul 16 die Freisprechfunktion aktiviert und in Bereitschaftsstellung geschaltet für den Fall, daß ein Telefongespräch geführt wird. D.h. im Falle eines Telefonats wird dann insbesondere das externe Mikrofon und der externe Lautsprecher (beide in der Zeichnung nicht dargestellt und beispielsweise schon im Autoradio vorhanden) eingeschaltet und das Mute-Signal schaltet das Autoradio stumm. Wenn die Version realisiert ist, bei welcher die Schale 14 über das Systemkabel 18 mit Stecker 20 an die Montageeinheit 12 angeschlossen ist, wird mit Abnehmen der Halterung 14 (mit eingelegtem Mobiltelefon) von der Montageeinheit 12 die oben genannte Bereitschaftsstellung von Freisprechen auf einen Privatmodus umgeschaltet und im Falle, daß das Telefongespräch geführt wird, der externe Lautsprecher und das externe Mikrofon abgeschaltet und das Radio über Mute-Signal stumm geschaltet.

Um auch für diesen Betrieb im Privatmodus keine - im betriebsbereiten Kraftfahrzeug ohnehin unterdessen verbotenen - manuellen Handhabungen wie Abnehmen des Mobiltelefones aus seiner Halterung 14 ausführen zu müssen, ist die Montageeinheit 12 zweckmäßigerweise mit einer Steckfassung für einen kleinen Sender-Empfänger 25a ausgestattet, der etwa in Bluetooth-Technik eine mehrkanalige drahtlose Signalübertragung über Funk- oder Infrarotstrecken an einen entsprechenden Sender-Empfänger eines Headset 25b mit Kopfhörer und Mikrofon übermittelt.

Anstelle oder zusätzlich zu dem bei der Anordnung in Fig. 1 vorhandenen als Audiomodul ausgebildeten Sender-Empfänger 25a kann ein Personal Digital Assistant, ein sogenannter PDA oder Mini-PC, über Kabel oder kabellos, z.B. über Funk oder Blue Tooth an die Montageeinheit 12 angeschlossen werden. Vorzugsweise ist die Anschlußmöglichkeit bei Ausführungen in Fig. 1 vorgesehen, bei denen die Halterung 14 kein Anschlußkabel 18 aufweist, sondern über die elektrische Steckverbindung mit der Montageeinheit 12 verbindbar ist und die Montageeinheit 12 entsprechende Elektronik, vorzugsweise einen Mikroprozessor aufweist. Der in Fig. 1 nicht dargestellte PDA kann mittels einer im Kraftfahrzeug stationären Halterung befestigt werden, vorzugsweise kann die Anordnung in der Nähe der Montageeinheit erfolgen. Mit dem Anschluß des PDA wird es möglich, über das Mobiltelefon empfangene SMS- oder Mailnachrichten am Display des PDA anzuzeigen oder vorzulesen. Außerdem ist es mit dem Anschluß des PDA auch möglich, einen Internetzugang im Kraftfahrzeug herzustellen, wobei der PDA die notwendige Technik bereits mitbringt, d.h. Rechenleistung, Betriebssystem und Browser usw.. Mit der Möglichkeit der Internetanbindung kann auch über einen Dienstleister, z.B. Passo, der Weg navigiert werden. Darüber hinaus ist es möglich, über den PDA die Fernsprecheinrichtung bzw. das Mobiltelefon anzusteuern, indem die Daten in den PDA eingegeben werden oder in den PDA gespeicherte Daten verwendet werden, z.B. kann das Telefonbuch des PDA für die Nummernwahl verwendet werden.

Für den Datenverkehr erfolgt eine automatische Abstimmung zwischen der Halterung 14 und dem Schnittstellenmodul 16 aufeinander, völlig unabhängig vom gerade zu betreibenden Mobiltelefon. Vor der Schnittstellenkonfiguration herrscht die synchrone Grundeinstellung der Büsteilnehmer. Nach dem Einschalten bzw. Anstecken der Halterung 14 an den Bus 22 zum Schnittstellenmodul 16 hört die Halterung 14 in der Grundeinstellung den Bus ab. Empfängt die Halterung 14 innerhalb einer vorgegebenen Zeitspanne in der Größenordnung von z.B. drei Sekunden keine Initialisierungskennung, schaltet die Halterung 14 ihre Schnittstelle auf Pegelsteuerung um, weil offenbar kein funktionstüchtiges Schnittstellenmodul 16 oder eines mit Pegelsteuerung statt mit Prozessor-Ablaufsteuerung angeschlossen ist; d.h., es werden dann keine Datentelegramme gesendet, sondern die Schnittstellensteuerung erfolgt über analoge Signale und somit in einer Betriebsart, in der immerhin noch bestimmte Komfort-Grundfunktionen wie Stummschaltung des Autoradios bei Funkkommunikation und deren Lautstärkeregelung funktionieren. Beim Verbindungsaufbau findet also zur Beschleunigung der Initialisierung keine zusätzliche Belastung durch etwaigen Austausch systemspezifischer Daten des gerade eingesetzten Mobiltelefones statt. Der aktuelle Datenaustausch bezieht sich immer nur auf Daten, die typisch für die Halterung 14 und das Schnittstellenmodul 16 mit ihren integrierten Prozessoren sind, er enthält keine hinsichtlich des Mobiltelefons gerätetypischen Daten.

Das Modul 16 sendet zunächst zyklisch eine Initialisierungskennung für den Kommunikationsaufbau, bis bei Anschluß einer Halterung 14 über den Bus 22 eine Initialisierungsantwort von der Halterung 14 kommt. Damit kann die Schnittstellenkonfiguration über Datenaustausch stattfinden, nämlich auf optimale Geschwindigkeit und Datensicherheit zwischen Datenbus-Teilnehmern verschiedener Ausbaustufen.

Ist auf diese Weise der Verbindungsaufbau erfolgreich, sendet der Schnittstellenmodul 16 seine Schnittstellenparameter an die Halterung 14, die eine bestmögliche Schnittstellenverbindung aus Sicht des Schnittstellenmoduls 16 darstellen. Das bedeutet, daß die Halterung 14 die Parameter des Schnittstellenmoduls 16 zurücksendet, wenn sie von der Halterung 14 unterstützt werden und wenn sie besser sind, als die Parameter der Haiterung 14; andernfalls sendet sie ihre eigenen Parameter zurück (Maximalanforderung des Schnittstellenmoduls 16). Sollte das Schnittstellenmodul 16 die über den Bus 22 empfangenen Schnittstellenparameter nicht unterstützen können, sendet es neue Parameter an die Halterung 14, die höchstens dieselben Anforderungen haben, wie die gerade von der Halterung 14 empfangenen Parameter. Nach einer vorgegeben Anzahl von beispielsweise drei ergebnislosen Paramertervorschlägen bleibt es jedoch bei der oben erwähnten Grundeinstellung.

Die Schnittstellenkonfiguration wird ausgelöst, wenn das Schnittstellenmodul 16 ein Umschaltkommando zurücksendet, weil es den aktuell empfangenen Satz von Schnittstellenparametern unterstützen kann. Damit schalten Halterung 14 und Schnittstellenmodul 16 auf die neue Konfiguration um. Mit dieser werden dann zum Testen noch einmal die aktuell gültigen Parameter ausgetauscht. Nun kann die digitale Kommunikation zwischen Halterung 14 und Schnittstellenmodul 16 über den Bus 22 stattfinden.

Um die Nutzkommunikation zwischen Halterung 14 und Schnittstellenmodul 16 automatisch autorisieren zu können, ist eine Berechtigungsprüfung zweckmäßig, um mögliche Betriebsstörungen aufgrund von Unverträglichkeiten weitestgehend ausschließen zu können. Die Berechtigungsprüfung bezieht sich also weniger auf den Nutzer als vielmehr vor allem darauf, daß u.U. Komponenten bestimmter Auslegung nur in bestimmten Fahrzeugtypen betrieben werden dürfen. Sie folgt zweckmäßigerweise unmittelbar auf die zuvor beschriebene, erfolgreich abgeschlossene Schnittstellenkonfiguration. Nur wenn die für verschiedene Fahrzeughersteller oder Betreiber vom Lieferanten der Freisprechanlage zum jeweiligen Fahrzeugtyp vergebenen Kennungen in Form von Codenummern hinsichtlich Halterung14 und / oder Schnittstellenmodul 16 paarweise einander zugeordnet sind, kann der Datenverkehr aufgenommen werden, also die Kommunikation über diese Freisprechanlage stattfinden.

Dabei ist eine Datenkompression auf dem Bus 22 von der Montageeinheit 12 (also letztlich von der Telefon-Halterung 14) zum Schnittstellenmodul 16 zweckmäßig, um hier die erforderliche Übertragungsbandbreite und dementsprechend den Aufwand für Entstörungsmaßnahmen gering halten zu können. Für das Komprimieren wird aus Aufwandsgründen auf eines der eingeführten Standardverfahren zurückgegriffen.

Eine zusätzliche Verschlüsselung des Datenverkehrs ist ein wirksames Mittel gegen etwaige unautorisierte Eingriffe in die Schnittsteitenkonfiguration. Für das Chiffrieren genügt es im vorliegenden Zusammenhang, auf die Übertragung von Zeichen im Klartext zu verzichten, indem eines der bekannten, schnellen Verschlüsselungsverfahren auf unterster Ebene unter Vermeiden einer Wiederholung gleicher Zeichenmuster verwirklicht wird. Vorzugsweise wird das erste Zeichens eines Datentelegrammes, bei dem es sich um das auch empfängerseitig bekannte Synchronisationszeichen handelt, einer Quasi-Zufallsbehandlung nach bestimmter Gesetzmäßigkeit unterworfen. Empfangsseitig wird dann das erste empfangene Zeichen in das bekannte Synchronisationszeichen rückgewandelt und die daraufhin erscheinende Datenfolge ebenfalls gemäß der dafür sich ergebenden Gesetzmäßigkeit behandelt. Der Sender chiffriert also alle Zeichen eines Telegramms nach dem gleichen für das Synchronisationszeichen vorgegebenen Muster (hinsichtlich Verschiebung und Verknüpfung seiner Bits). Der Empfänger führt das erste empfangene Zeichen auf die Bitfolge des bekannten Synchronisationszeichens zurück und wendet dann des Prozedur (hinsichtlich Verschiebung und Verknüpfung der Bits eines Zeichens) auch auf die folgenden Zeichen des Telegramms an. Durch fortlaufenden Wechsel der Kodierung haben die Telegramme selbst solcher Daten, die betriebsbedingt oder zur Redundanzerhöhung mehrfach übertragen werden, auf der Schnittstelle stets unterschiedliches Aussehen.

Da das Schnittstellenmodul 16 vorzugsweise für Einsatzmöglichkeit in unterschiedlichen Fahrzeugen ausgelegt wird, ist es zweckmäßig, darin Zusatzfunktionen zu verwirklichen, de nur bedarfsweise aktiviert werden. Eine solche Zusatzfunktion ist die Sprachsteuerung der Halterung 14 und damit des Mobiltelefons, die aber auch zur Steuerung von Fahrzeugfunktionen herangezogen werden kann. Das ist insbesondere problemlos realisierbar bei Funktionen, die ohnehin mit dem Schnittstellenmodul 16 funktional verbunden sind, wie das Autoradio, dessen Lautsprecher für die Freisprecheinrichtung genutzt wird. Dann kann aber der zu erkennende Sprachschatz auch gleich für die Akustiksteuerung etwa von am Kfz-Universalbus hängenden Komfortfunktionen wie Sitzverstellung, Fensterheber, Navigationsanzeige u dgl mit eingegeben werden, apparativer Mehraufwand entsteht dadurch nicht mehr. Im Rahmen vorliegender Erfindung kann sogar auf den Einbau eines eigenständigen Schnittstellenmoduls (16) verzichtet werden, wenn dessen Funktion schon anderweitig im Kraftfahrzeug implementiert ist, wie beispielsweise in der Funktion einer Telematik-Box als Universal-Steuergerät etwa für Autoradio, Fernseher, Internetzugang und Navigationssystem, die dann auch für vorliegende Freisprecheinrichtung mitbenutzt werden kann.

Besonders zweckmäßig ist der Anschluß des Halters 14 gemäß vorliegender Erfindung an einen Kommunikationsport eines Autoradios mit universeller Eingabetastatur und Display. Denn dann kann der Halter samt seinem Mobiltelefon beispielsweise ins Handschuhfach eingeschlossen werden, weil nun - zusätzlich zum Lautsprecher und Mikrofon - für Bedienungs- und Anzeigefunktionen des Mobiltelefons das Autoradio herangezogen wird. Der Anschluß der Halterung an das Rundfunkgerät des Kraftfahrzeuges kann mit minimalem zusätzlichem Verkabelungsaufwand über eine weitere Schnittstelle erfolgen, über den auch telefonspezifische Datensätze wie Adressen und Anschlußnummern, SMS-Telegramme oder Servicedaten aus dem Fahrzeug heraus ebenso wie in es hinein übertragbar sind.

Eine ergonomisch vorteilhafte Anordnung von Bedienelementen an der für leicht demontierbare Aufnahme der Halterung 14 optimierten Montageeinheit 12 ist nicht ohne weiteres möglich. Zum Einschalten der Freisprecheinrichtung bzw. ihres Spracherkenners ist deshalb ein autarkes da batteriebetriebenes und deshalb im Fahrgastraum beliebig, auch bei den Fahrgästen auf den rückwärtigen Sitzen positionierbares kleines Steuergerät mit einigen wenigen Tasten zweckmäßig, unter denen eine Notruftaste sein kann, aber auch Bedienungsmöglichkeiten zur Steuerung von Informationsanzeigen oder etwa von Multimediaanwendungen im Kraftfahrzeug. Insbesondere kann an dem Gerät auch mindestens eine sogenannte "Push to talk" Taste vorhanden sein, über die die Sprachsteuerung der Freisprecheinrichtung und/oder anderer im Fahrzeug installierter Einrichtungen ein/ausschaltbar sind. Ferner können auch Tasten zur Steuerung von reinen Fahrzeugfunktionen wie Fensterheber, Sitzverstellung usw. in dem Gerät vorgesehen sein. Die Signalübertragung zum Halter des Mobiltelefons, also somit in dessen Steuerung hinein und daraus weiter auf den Kfz-Bus, erfolgt zweckmäßigerweise drahtlos, insbesondere über eine mit gängigen Komponenten preiswert erstellbare Infrarotstrecke. Das eröffnet Möglichkeiten, die sonst nur beschränkt in der obersten Ausstattungsklasse mit Multifunktions-Lenkrad anzutreffen sind.

Weil für die Kommunikation zwischen Schnittstellenmodul 16 und Montageeinheit 12 für die Halterung 14 ein Bus 22 vorgesehen ist, können problemlos mehrere Mobiltelefone mit ihren Haltern 14 an das einzige Schnittstellenmodul 16 eines Fahrzeuges zusätzlich angeschlossen und von hier aus verwaltet werden, was die universelle Verwendbarkeit der erfindungsgemäßen Freisprecheinrichtung eindrucksvoll unterstreicht.

## Patentansprüche

1. Freisprecheinrichtung für den Betrieb von Mobiltelefonen in Kraftfahrzeugen, z.B. Persorienkraftwagen, Bussen, Lastkraftwagen.und anderen Nutzfahrzeugen, mit einem Schnittstellenmodul (16), und mit einer leicht auswechselbaren mobiltelefonspezifischen, ein Mobiltelefon temporär aufnehmenden Halterung (14),
**dadurch gekennzeichnet,**
**dass** das Schnittstellenmodul (16) im Kraftfahrzeug installierbar ist und einen Mikroprozessor mit gespeicherten fahrzeugspezifischen Daten enthält,
**dass** die Freisprecheinrichtung eine im Fahrzeug installierbare Montageeinheit (12) aufweist, die der Halterung (14) zugeordnet ist,
**dass** die Montageeinheit (12) und/oder die Halterung (14) einen Mikroprozessor mit gespeicherten mobiltelefonspezifischen Daten enthält,
und **dass** vorgesehen ist,
a) **dass** die Mikroprozessoren über eine serielle, wahlweise synchron und/oder asynchron betreibbare Schnittstelle über einen Bus (22) miteinander verbunden sind, um zu kommunizieren, um dabei zu Betriebsbeginn die Schnittstelle gemäß der aktuellen Gerätekombination automatisch zu konfigurieren; und/oder
b) **dass** die Mikroprozessoren über eine serielle, wahlweise synchron und/oder asynchron betreibbare Schnittstelle über einen Bus (22) miteinander verbunden sind, um zu kommunizieren, um dabei eine Berechtigungsprüfung hinsichtlich der Zulässigkeit des Betriebs eines Mobiltelefons an dem vorliegenden Schnittstellenmodul (16) durch führen zukönnen; und/oder
c) **dass** die vorzugsweise über einen Bus (22) miteinander kommunizierenden Mikroprozessoren eine Datenverschlüsselung und/oder eine Datenkompression durchführen können.

2. Freisprecheinrichtung nach Anspruch 1,
**dadurch gekennzeichnet,**
**dass** die Freisprecheinrichtung Mittel zur Auslösung einer Schnittstellenkonfiguration aufweist, wobei die Freisprecheintichtung derart ausgestaltet ist, dass eine Schnittstellenkonfiguration ausgelöst wird, wenn das Schnittstellenmodul (16) ein Umschaltkommando an die Montageeinheit (12) zurücksendet, weil es dessen gerade empfangenen Satz von Schnittstellenparametern unterstützen kann.

3. Freisprecheinrichtung nach einem der vorangegangenen Ansprüche,
**dadurch gekennzeichnet,**
**dass** die Freisprecheinrichtung Mittel zur Verschlüsselung aufweist, wobei die Freisprecheintichtung derart ausgestaltet ist, dass das erste Zeichen eines Datentelegramms ein empfängerseitig bekanntes Synchronisationszeichen ist, das senderseitig gemäß einer vorgegebenen Gesetzmäßigkeit quasi zufällig, vorzugsweise durch Rotation und/oder Verknüpfung seiner Bitfolge chiffriert wird, woraufhin die anderen Zeichen des zu sendenden Datentelegramms nach der gleichen Gesetzmäßigkeit chiffriert werden, während empfangsseitig das erste Zeichen entsprechend, vorzugsweise durch Bitrotation und/oder Verknüpfung in das erwartete Synchronisationszeichen rückgewandelt wird, woraufhin auch die anderen Zeichen dieses Telegramms in gleicher Weise behandelt werden.

4. Freisprecheinrichtung nach Anspruch 3,
**dadurch gekennzeichnet,**
**dass** die Freisprecheinrichtung Mittel zur Verschlüsselung aufweist, wobei die mittel derart ausgestaltet sind dass die Gesetzmäßigkeit für aufeinander folgende Datentelegramme änderbar ist.

5. Freisprecheinrichtung nach einem der vorangehenden Ansprüche,
**dadurch gekennzeichnet,**
**dass** eine kabellose Steckverbindung (12a) zwischen Halterung (14) und Montageeinheit (12) vorgesehen ist und/oder dass eine Kabelverbindung (18) mit Stecker (20) zwischen Halterung (14) und Montageeinheit (12) vorgesehen ist oder dass keine elektrische Verbindung zwischen Halterung (14) und Montageeinheit (12), sondern eine Kabelverbindung.mit Stecker zwischen Halterung (14) und dem Schnittstellenmodul (16) vorgesehen ist.

6. Freisprecheinrichtung nach einem der vorangehenden Ansprüche,
**dadurch gekennzeichnet,**
**dass** die Halterung (14) und/oder Montageeinheit (12) an einem im Kraftfahrzeug ohnehin, z.B. für den Betrieb eines Autoradios, eines Fernsehers, eines Navigationssystems, des Internets oder eines Kommunikationssystems, wie z. B. Telematic, vorhandenen Steuergerät anschließbar ist.

7. Freisprecheinrichtung nach einem der vorangehenden Ansprüche,
**dadurch gekennzeichnet,**
**dass** die Halterung (14) und/oder die Montageeinheit (12) am im Kraftfahrzeug installierbaren Schnittstellenmodul (16) mit auf einem Mikroprozessor gespeicherten fahrzeugspezifischen Daten anschließbar ist und an der Halterung (14) und/oder der Montageeinrichtung (12) und/oder an dem Schnittstellenmodul (16) ein kabelloses Fernsteuergerät anschließbar ist, wobei vorgesehen ist, dass über das Fernsteuergerät auch derartige andere Funktionen als die Freisprecheinrichtung im Kraftfahrzeug fernsteuerbar sind, wie sie etwa über ein Multifunktionslenkrad ansteuerbar wären,
worin vorgesehen ist,
**dass** das Schnittstellenmodul (16), an dem die Halterung (14) und/oder die Montageeinheit (12) über das kabellose Fernsteuergerät anschließbar ist, als ein im Kraftfahrzeug ohnehin für den Betrieb eines Autoradios, des Fernsehers, eines Navigationssystems, des Internets und/oder eines Kommunikationssystems, wie z.B. Telematic, vorhandenes Schnittstellenmodul (16) und/oder Steuergerät ausgebildet ist. -

8. Freisprecheinrichtung nach einem der vorangehenden Ansprüche,
**dadurch gekennzeichnet,**
**dass** die Halterung (14) und/oder die Montageeinheit (12) an einem im Kraftfahrzeug installierbarem Schhittstellenmodul (16) mit auf einem Mikroprozessor gespeicherten fahrzeugspezifischen Daten anschließbar ist, das auch mit einem Spracherkenner zur verbalen Steuerung der.Freisprecheinrichtung und auch anderer Funktionen im Kraftfahrzeug ausgestattet ist,
worin vorgesehen ist,
**dass** das mit dem Spracherkenner ausgestattete Schnittstellmodul (16) als ein im Kraftfahrzeug ohnehin, z.B. für den Betrieb eines Autoradios, eines Fernsehers, eines Navigationssystems, des Internets und/oder eines Kommunikationssystems, wie z.B. Telematic, vorhandenes Schnittstellenmodul (16) oder Steuerungsgerät ausgebildet ist.

9. Freisprecheinrichtung nach einem der vorangehenden Ansprüche,
**dadurch gekennzeichnet,**
**dass** mehrere jeweils einen Mikroprozessor aufweisende Halterungen (14) und/oder Montageeinrichtungen (12) vorgesehen sind, die an einem Bus (22) zu einem gemeinsamen im Kraftfahrzeug installierbaren, einen Mikroprozessor aufweisenden Schnittstellenmodul (16) anschließbar sind.

10. Freisprecheinrichtung nach einem der vorangehenden Ansprüche,
**dadurch gekennzeichnet,**
**dass** zur Verbindung des Mikroprozessors der Halterung (14) bzw. der Montageeinheit (12) mit dem Mikroprozessor des Schnittstellenmoduls (16) ein Bus vorgesehen ist, der als kabelloser immaterieller Bus ausgebildet ist.

11. Freisprecheinrichtung nach einem der vorangehenden Ansprüche,
**dadurch gekennzeichnet,**
**dass** die Montageeinheit (12) und/oder die Halterung (14) mit einem Sender/Empfänger (25a) für drahtlose Audioverbindung zu einem Sender-Empfänger an einem Headset (25b) mit Kopfhörer und Mikrofon versehen ist.

12. Freisprecheinrichtung nach Anspruch 11,
**dadurch gekennzeichnet,**
**dass** der Sender/Empfänger (25a) der Montageeinheit (12) bzw. der Halterung (14) als separate und/oder nachrüstbare Baueinheit ausgebildet ist.

13. Freisprecheinrichtung nach Anspruch 11 oder 12,
**dadurch gekennzeichnet, dass** die Freisprecheinrichtung derart ausgestaltet ist, dass die Audioverbindung so geschaltet ist, dass sie eingeschaltet ist, wenn die Freisprecheinrichtung in Privatmodus geschaltet ist und dabei automatisch Kopfhörer und Mikrofon des Headset (25b) eingeschaltet und die externen Lautsprecher und Mikrofon der Freisprecheinrichtung ausgeschalten sind.

14. Freisprecheinrichtung nach einem der Ansprüche 11 bis 13,
**dadurch gekennzeichnet,**
**dass** die Audioverbindung über einen von Hand betätigbaren Schalter und/oder über eine Sprachsteuerung ein-/ausschaltbar ist.

15. Freisprecheinrichtung nach Anspruch 14,
**dadurch gekennzeichnet,**
**dass** der von Hand betätigbare Schalter im.Bereich des Senders-Empfängers (25a) der Montageeinheit (12) bzw. der Halterung (14) und/oder im Bereich des Senders-Empfängers des Headsets (25) angeordnet ist.

16. Freisprecheinrichtung nach einem der vorangehenden Ansprüche,
**dadurch gekennzeichnet,**
**dass** bei eingeschaltetem Privatmodus die Halterung (14) an und/oder auf der Montageeinheit (12) angeordnet ist.

17. Freisprecheinrichtung nach einem der vorangehenden Ansprüche,
**dadurch gekennzeichnet,**
**dass** an die Montageeinheit (12) und/öder die Halterung (14) und/oder an das Schnittstellenmodul (16) eine Rechen- und/oder Speicher- und/oder Anzeigeeinrichtung anschließbar ist.

18. Freisprecheinrichtung nach Anspruch 17,
**dadurch gekennzeichnet,**
**dass** die an die Montageeinheit (12) und/oder die Halterung (14) und/oder an das Schnittstellenmodul (16) anschließbare Rechen- und/oder Speicher- und/oder Anzeigeeinrichtung als Computer mit Display, vorzugsweise Laptop oder Notebook, oder insbesondere als Personal Digital Assistant (PDA) oder Organizer oder Mini-Computer ausgebildet ist.

19. Freisprecheinrichtung nach Anspruch 18,
**dadurch gekennzeichnet,**
**dass** die Rechen- und/oder Speicher- und/oder Anzeigeeinrichtung über Kabel oder kabellos, z.B. über Funk, Blue Tooth, anschließbar ist.

20. Freisprecheinrichtung nach einem der vorangehenden Ansprüche,
**dadurch gekennzeichnet,**
**dass** die Montageeinheit (12) eine in dem Kraftfahrzeug stationär anbringbare Konsole (12) od.dgl. aufweist, wobei die Konsole (12) am Armaturenbrett oder an der Mittelkonsole oder an der Armlehne oder in oder am Handschuhfach oder in einer Tür, vorzugsweise an der Innenseite einer Fahrzeugtür, anbringbar ist.

21. Freisprecheinrichtung nach Anspruch 20,
**dadurch gekennzeichnet,**
**dass** die Konsole (12) eine an die Befestigungsstelle am Armaturenbrett, an der Mittelkonsole oder an der Armlehne angepasste Befestigungsseite aufweist.

22. Freisprecheinrichtung nach einem der beiden vorangehenden Ansprüche,
**dadurch gekennzeichnet,**
**dass** die zur temporären Aufnahme des Mobiltelefons ausgebildete Halterung (14) mit der Konsole temporär verbindbar ist.

23. Freisprecheinrichtung nach einem der vorangehenden Ansprüche,
**dadurch gekennzeichnet,**
**dass** die Halterung als in der Form vorzugsweise schalenförmig an das Mobiltelefon angepasste Aufnahme zur temporären Aufnahme des Mobiltelefons ausgebildet' ist.

24. Freisprecheinrichtung nach einem der vorangehenden Ansprüche,
**dadurch gekennzeichnet,**
**dass** die Halterung (14) einen elektrischen Anschluss für das Mobiltelefon und vorzugsweise eine Steuereinheit, insbesondere mit Mikroprozessor, aufweist.

25. Kraftfahrzeug mit einer darin installierten Freisprecheinrichtung nach einem der vorangehenden Ansprüche.

## Claims

1. Hands-free device for the operation of mobile telephones in motor vehicles, for example passenger vehicles, buses, heavy goods vehicles and other utility vehicles, comprising an interface module (16) and comprising an easily replaceable holder (14) which is specific to the mobile telephone and temporarily receiving a mobile telephone, **characterised in that** the interface module (16) may be installed in the motor vehicle and contains a microprocessor with stored vehicle-specific data,
**in that** the hands-free device comprises a mounting unit (12) which may be installed in the vehicle, which is associated with the holder (14),
**in that** the mounting unit (12) and/or the holder (14) contains a microprocessor with stored data specific to the mobile telephone,
and **in that** it is provided
a) that the microprocessors are connected to one another in order to communicate via a serial, selectively synchronously and/or asynchronously operable interface, via a bus (22), in order to configure the interface automatically at the start of the operation according to the current combination of devices; and/or
b) that the microprocessors are connected to one another in order to communicate via a serial, selectively synchronously and/or asynchronously operable interface, via a bus (22), in order to be able to execute authorisation checking with regard to the validity of the operation of a mobile telephone at the present interface module (16); and/or
c) that the microprocessors which preferably communicate with one another via a bus (22) are able to implement data encryption and/or data compression.

2. Hands-free device according to Claim 1, **characterised**
**in that** the hands-free device comprises means for triggering an interface configuration, the hands-free device being designed such that an interface configuration is triggered when the interface module (16) sends a switchover command back to the mounting unit (12), as it is able to support the set of interface parameters thereof which have just been received.

3. Hands-free device according to one of the preceding claims, **characterised in that** the hands-free device comprises means for encryption, the hands-free device being designed such that the first character of a data telegram is a synchronisation character which is known on the receiver side, and which on the transmitter side is encoded quasi-randomly according to a predetermined standard, preferably by rotation and/or interlinking of its bit sequence, whereupon the other characters of the data telegram to be transmitted are encoded according to the same standard, whilst on the receiver side the first character is correspondingly converted back into the expected synchronisation character, preferably by bit rotation and/or interlinking, whereupon the other characters of said telegram are also treated in the same manner.

4. Hands-free device according to Claim 3, **characterised**
**in that** the hands-free device comprises means for encryption, the means being designed such that the standard may be altered for successive data telegrams.

5. Hands-free device according to one of the preceding claims, **characterised in that** a wireless plug connection (12a) is provided between the holder (14) and the mounting unit (12), and/or **in that** a cable connection (18) with a plug (20) is provided between the holder (14) and the mounting unit (12) or **in that** no electrical connection is provided between the holder (14) and the mounting unit (12), but a cable connection with a plug is provided between the holder (14) and the interface module (16).

6. Hands-free device according to one of the preceding claims, **characterised in that** the holder (14) and/or mounting unit (12) may be connected to a control unit which is present in any case in the motor vehicle, for example for the operation of a car radio, a television, a navigation system, the Internet or a communication system, such as for example telematics.

7. Hands-free device according to one of the preceding claims, **characterised in that** the holder (14) and/or the mounting unit (12) may be connected to the interface module (16) which may be installed in the motor vehicle, with vehicle-specific data stored on a microprocessor and a wireless remote control unit may be connected to the holder (14) and/or the mounting unit (12) and/or the interface module (16), it being provided that via the remote control unit such functions other than the hands-free device may also be remotely controlled in the motor vehicle, as would be actuatable via, for example, a multifunction steering wheel,
wherein it is provided
that the interface module (16), to which the holder (14) and/or the mounting unit (12) may be connected via the wireless remote control unit, is configured as an interface module (16) and/or control unit, which is present in any case in the motor vehicle for the operation of a car radio, the television, a navigation system, the Internet and/or a communication system, such as for example telematics.

8. Hands-free device according to one of the preceding claims, **characterised in that** the holder (14) and/or the mounting unit (12) may be connected to an interface module (16) which may be installed in the motor vehicle, comprising vehicle-specific data stored on a microprocessor, which is also provided with a voice recognition unit for voice control of the hands-free device and also other functions in the motor vehicle, wherein it is provided that
the interface module (16) provided with the voice recognition unit is configured as an interface module (16) or control unit, which is present in any case in the motor vehicle, for example for the operation of a car radio, a television, a navigation system, the Internet and/or a communication system, such as for example telematics.

9. Hands-free device according to one of the preceding claims, **characterised in that** a plurality of holders (14) and/or mounting units (12) are provided, respectively comprising a microprocessor and which may be connected at a bus (22) to a common interface module (16) which may be installed in the motor vehicle and comprising a microprocessor.

10. Hands-free device according to one of the preceding claims, **characterised in that** for connecting the microprocessor of the holder (14) and/or the mounting unit (12) to the microprocessor of the interface module (16) a bus is provided which is configured as a wireless immaterial bus.

11. Hands-free device according to one of the preceding claims, **characterised in that** the mounting unit (12) and/or the holder (14) is provided with a transmitter/receiver (25a) for wireless audio connection to a transmitter-receiver on a headset (25b) with a headphone and microphone.

12. Hands-free device according to Claim 11, **characterised**
**in that** the transmitter/receiver (25a) of the mounting unit (12) and/or the holder (14) is configured as a separate and/or retrofittable unit.

13. Hands-free device according to Claim 11 or 12,
**characterised in that** the hands-free unit is designed such that the audio connection is switched in such a manner that it is switched on when the hands-free device is switched to private mode and thus the headphone and microphone of the headset (25b) are automatically switched on and the external loudspeaker and microphone of the hands-free device are switched off.

14. Hands-free device according to one of Claims 11 to 13, **characterised in that** the audio connection may be switched on/off via a switch which may be actuated manually and/or via a voice control unit.

15. Hands-free device according to Claim 14, **characterised**
**in that** the switch which may be actuated manually is arranged in the region of the transmitter-receiver (25a) of the mounting unit (12) and/or the holder (14) and/or in the region of the transmitter-receiver of the headset (25).

16. Hands-free device according to one of the preceding claims, **characterised in that** when the private mode is switched on, the holder (14) is arranged at and/or on the mounting unit (12).

17. Hands-free device according to one of the preceding claims, **characterised in that** a computing and/or memory and/or display device may be connected to the mounting unit (12) and/or the holder (14) and/or the interface module (16).

18. Hands-free device according to Claim 17, **characterised**
**in that** the computing and/or memory and/or display device which may be connected to the mounting unit (12) and/or the holder (14) and/or the interface module (16) is configured as a computer with a display, preferably a laptop or notebook, or in particular as a personal digital assistant (PDA) or organiser or minicomputer.

19. Hands-free device according to Claim 18, **characterised**
**in that** the computing and/or memory and/or display device may be connected via a wired connection or wirelessly, for example via radio or bluetooth.

20. Hands-free device according to one of the preceding claims, **characterised in that** the mounting unit (12) has a bracket (12) or the like which may be attached in a fixed manner in the motor vehicle, the bracket (12) being able to be attached to the instrument panel or to the central console or to the armrest or in or on the glove compartment or in a door, preferably on the inside of a vehicle door.

21. Hands-free device according to Claim 20, **characterised**
**in that** the bracket (12) has a fastening side adapted to the fastening point on the instrument panel, the central console or the armrest.

22. Hands-free device according to one of the two preceding claims, **characterised in that** the holder (14) configured for temporarily receiving the mobile telephone may be temporarily connected to the bracket.

23. Hands-free device according to one of the preceding claims, **characterised in that** the holder is configured as a receptacle, preferably adapted in the form of a cradle to the mobile telephone for temporarily receiving the mobile telephone.

24. Hands-free device according to one of the preceding claims, **characterised in that** the holder (14) has an electrical connection for the mobile telephone, and preferably a control unit, in particular comprising a microprocessor.

25. Motor vehicle comprising a hands-free device installed therein according to one of the preceding claims.

## Revendications

1. Kit mains libres permettant le fonctionnement de téléphones mobiles dans des véhicules automobiles, par ex. des véhicules personnels, des bus, des camions et d'autres véhicules utilitaires, comportant un module d'interface (16), et comportant un support (14) recevant temporairement un téléphone mobile, spécifique au téléphone mobile et facilement remplaçable,
**caractérisé en ce que**
le module d'interface (16) peut être installé dans le véhicule automobile et contient un microprocesseur comportant des données mémorisées spécifiques au véhicule,
**en ce que** le kit mains libres présente une unité de montage (12) pouvant être installée dans le véhicule, qui est coordonnée au support (14),
**en ce que** l'unité de montage (12) et/ou le support (14) contient un microprocesseur comportant des données mémorisées spécifiques au véhicule,
et **en ce que** il est prévu que
a) les microprocesseurs soient reliés les uns aux autres par l'intermédiaire d'un bus via une interface sérielle, exploitable au choix de manière synchrone et/ou asynchrone, afin de communiquer, de manière à configurer ainsi automatiquement l'interface au début du fonctionnement selon la combinaison d'appareils actuelle ; et/ou
b) les microprocesseurs sont reliés les uns aux autres par l'intermédiaire d'un bus, via une interface sérielle, exploitable au choix de manière synchrone et/ou asynchrone, afin de communiquer, de manière à pouvoir ainsi effectuer un contrôle d'accès en ce qui concerne l'admissibilité de fonctionnement d'un téléphone mobile sur le présent module d'interface (16) et/ou
c) les microprocesseurs communiquant les uns avec les autres via un bus (22) peuvent effectuer un chiffrement de données et/ou une compression de données.

2. Kit mains libres selon la revendication 1,
**caractérisé en ce que**
le kit mains libres présente des moyens pour déclencher une configuration d'interface, dans lequel le kit mains libres est configuré de telle sorte que une configuration d'interface soit déclenchée quand le module d'interface (16) renvoie une commande de commutation à l'unité de montage (12), parce que il peut supporter le jeu de paramètres d'interface qu'il vient de recevoir.

3. Kit mains libres selon une des revendications précédentes,
**caractérisé en ce que**
le kit mains libres présente des moyens de chiffrement, dans lequel le kit mains libres et configuré de telle sorte que le premier chiffre d'un télégramme de données soit un chiffre de synchronisation reconnu du côté du récepteur, qui est chiffré du côté de l'émetteur selon une loi prescrite de manière quasi aléatoire, de préférence par rotation et/ou combinaison de sa séquence binaire, près quoi les autres chiffres du télégramme de données à envoyer sont chiffrés selon la même loi, alors que du côté du récepteur le premier chiffre est reconverti de manière correspondante, de préférence par rotation et/ou combinaison binaire en le chiffre de synchronisation escompté, après quoi les autres chiffres de ce télégramme sont aussi traités de la même manière.

4. Kit mains libres selon la revendication 3,
**caractérisé en ce que**
le kit mains libres présente des moyens de chiffrement, dans lequel les moyens sont configurés de telle sorte que les lois valables pour des télégrammes de données se succédant puissent être modifiées.

5. Kit mains libres selon une des revendications précédentes,
**caractérisé en ce que**
une liaison enfichable (12a) sans fil entre le support (14) et l'unité de montage (12) est prévue et/ou **en ce que** une liaison câblée (18) avec un connecteur (20) entre le support (14) et l'unité de montage (12) est prévue ou **en ce que** aucune liaison électrique entre le support (14) et l'unité de montage (12) n'est prévue, mais plutôt une liaison câblée avec connecteur entre le support (14) et le module d'interface (16).

6. Kit mains libres selon une des revendications précédentes,
**caractérisé en ce que**
le support (14) et/ou l'unité de montage (12) peuvent être raccordés à un appareil de commande présent dans le véhicule automobile, par ex. permettant le fonctionnement d'un autoradio, un téléviseur, un système de navigation, l'Internet ou un système de communication, comme par ex. la télématique.

7. Kit mains libres selon une des revendications précédentes,
**caractérisé en ce que**
le support (14) et/ou l'unité de montage (12) peuvent être raccordés au module d'interface (16) pouvant être installé dans le véhicule, comportant des données spécifiques au véhicule mémorisées sur un microprocesseur et un appareil de commande à distance sans fil peut être raccordé au support (14) et/ou au dispositif de montage (12) et/ou au module d'interface, moyennant quoi il est prévu que par l'intermédiaire de l'appareil de commande à distance, d'autres fonctions que le kit mains libres puissent être commandées à distance dans le véhicule, que celles qui auraient pu être commandées par l'intermédiaire de, par exemple, un volant multifonctions,
moyennant quoi il est prévu que
le module d'interface (16), auquel le support (14) et/ou l'unité de montage (12) peuvent être raccordés via l'appareil de commande à distance sans fil, est configuré comme un module d'interface (16) et/ou un appareil de commande présent dans le véhicule en vue du fonctionnement d'un autoradio, un téléviseur, un système de navigation, l'Internet et/ou un système de communication, comme par ex. la télématique.

8. Kit mains libres selon une des revendications précédentes,
**caractérisé en ce que**
le support (14) et/ou l'unité de montage (12) peuvent être raccordés à un module d'interface (16) pouvant être installé dans le véhicule, comportant des données spécifiques au véhicules, mémorisées sur un microprocesseur, qui est aussi équipé d'un dispositif de reconnaissance vocale à des fins de commande verbale du kit mains libres et aussi d'autres fonctions dans le véhicule,
moyennant quoi il est prévu que
le module d'interface (16) équipé du dispositif de reconnaissance vocale est configuré comme un module d'interface (16) ou un appareil de commande présent dans le véhicule, par ex. permettant le fonctionnement d'un autoradio, un téléviseur, un système de navigation, l'Internet et/ou un système de communication, comme par ex. la télématique.

9. Kit mains libres selon une des revendications précédentes,
**caractérisé en ce que**
plusieurs supports (14) et/ou dispositifs de montage (12) présentant respectivement un microprocesseur sont prévus, lesquels peuvent être raccordés à un bus (22) afin de former un module d'interface (16) commun pouvant être installé dans le véhicule, présentant un microprocesseur.

10. Kit mains libres selon une des revendications précédentes,
**caractérisé en ce que**
un bus est prévu afin de relier le microprocesseur du support (14), respectivement de l'unité de montage (12) au microprocesseur du module d'interface (16), lequel est configuré comme un bus immatériel sans fil.

11. Kit mains libres selon une des revendications précédentes,
**caractérisé en ce que**
l'unité de montage (12) et/ou le support (14) sont pourvus d'un émetteur/récepteur (25a) pour une liaison audio sans fil avec un émetteur/récepteur sur un casque (25b) avec écouteurs et microphone.

12. Kit mains libres selon la revendication 11,
**caractérisé en ce que**
l'émetteur/récepteur (25a) de l'unité de montage (12), respectivement du support (14) est configuré comme un composant séparé et/ou pouvant être rajouté ultérieurement.

13. Kit mains libres selon la revendication 11 ou 12,
**caractérisé en ce que**
le kit mains libres est configuré de telle sorte que la liaison audio soit activée de telle sorte qu'elle soit mise en service quand le kit mains libres est activé en mode privé et les écouteurs et le microphone du casque (25b) sont ainsi automatiquement mis en service et le haut-parleur et le microphone externes du kit mains libres sont mis hors service.

14. Kit mains libres selon une des revendications 11 à 13,
**caractérisé en ce que**
la liaison audio peut être mise en service/hors service via un interrupteur pouvant être actionné à la main et/ou via une unité de commande vocale.

15. Kit mains libres selon la revendication 14,
**caractérisé en ce que**
l'interrupteur pouvant être actionné à la main est disposé au niveau de l'émetteur/récepteur (25a) de l'unité de montage (12), respectivement du support (14) et/ou au niveau de l'émetteur/récepteur du casque (25).

16. Kit mains libres selon une des revendications précédentes,
**caractérisé en ce que**
lorsque le mode privé est mis en service, le support (14) est disposé sur l'unité de montage (12).

17. Kit mains libres selon une des revendications précédentes,
**caractérisé en ce que** un dispositif de calcul et/ou de mémorisation et/ou d'affichage peut être raccordé à l'unité de montage (12) et/ou au support (14) et/ou au module d'interface (16).

18. Kit mains libres selon la revendication 17,
**caractérisé en ce que**
le dispositif de calcul et/ou de mémorisation et/ou d'affichage pouvant être raccordé à l'unité de montage (12) et/ou au support (14) et/ou au module d'interface (16) est configuré comme un ordinateur avec écran, de préférence un ordinateur portable ou agenda électronique, ou notamment comme un assistant numérique personnel (PDA) ou un organiseur ou un mini-ordinateur.

19. Kit mains libres selon la revendication 18,
**caractérisé en ce que**
le dispositif de calcul et/ou de mémorisation et/ou d'affichage peut être raccordé via un câble ou sans fil, par ex. via des ondes radio, Blue Tooth.

20. Kit mains libres selon une des revendications précédentes,
**caractérisé en ce que**
l'unité de montage (12) présente une console (12) pouvant être montée de manière stationnaire dans le véhicule ou similaire, moyennant quoi la console (12) peut être montée sur le tableau de bord ou sur la console centrale ou sur les accoudoirs ou dans ou sur la boîte à gants ou dans une porte, de préférence sur le côté intérieur d'une porte de véhicule.

21. Kit mains libres selon la revendication 20,
**caractérisé en ce que**
la console (12) présente un côté de fixation adapté à l'emplacement de fixation sur le tableau de bord, sur la console centrale ou sur les accoudoirs.

22. Kit mains libres selon une des deux revendications précédentes,
**caractérisé en ce que**
le support (14) conçu afin de recevoir temporairement le téléphone mobile peut être relié temporairement à la console.

23. Kit mains libres selon une des revendications précédentes,
**caractérisé en ce que**
la support est configuré comme un réceptacle recevant temporairement le téléphone mobile adapté à la forme du téléphone mobile, de préférence en forme de coque.

24. Kit mains libres selon une des revendications précédentes,
**caractérisé en ce que**
le support (14) présente un raccord électrique pour le téléphone mobile et de préférence une unité de commande, notamment avec microprocesseur.

25. Véhicule automobile comportant un kit mains libres selon une des revendications précédentes installé dans celui-ci.
